# NEW EUROPEAN PATENT SPECIFICATION

(11) **EP 2 098 145 B2**
(45) Date of publication and mention of the opposition decision: **10.01.2018**
(45) Mention of the grant of the patent: 10.02.2010
(21) Application number: 09008307.2
(22) Date of filing: 08.04.2005
(51) Int. Cl.: A47J 31/44, A47J 31/60

(54) **Device for producing a milk-based drink**
Kaffeemaschine
Machine à café

(30) Priority: 21.04.2004 IT MI20040777
(43) Date of publication of application: 09.09.2009
(62) Divisional of application: 05755458.6
(73) Proprietor: DE' LONGHI S.p.A., 31100 Treviso (IT)
(72) Inventor: Marconi, Giancarlo, I-31057 Silea (Treviso) (IT)
(74) Representative: Rapisardi, Mariacristina

(56) References cited:
- EP-A- 0 472 272
- EP-A- 0 791 321
- WO-A-01/26520
- US-B1- 6 499 389

## Description

The present invention refers to a coffee machine having a device for producing a milk-based drink, in particular to a cappuccino, but more generally also to a coffee and milk drink without froth, or furthermore to a drink of just hot milk with or without froth.

It is known that in apparatuses for use in the home for preparing coffee or cappuccino there is a steam dispenser suitable for mixing the milk taken from a container with air to obtain a final emulsion of milk, air and steam that gives the drink the quantity of froth with the desired characteristics.

Such apparatuses suffer from some drawbacks, the greatest of which are those due to the awkwardness and poor versatility of use and to the difficulty of access to the inner parts for inspection.

Such apparatuses also do not have a system for cleaning the inner parts or have one that is not very effective so as to gradually bring about a deterioration of performance.

Moreover, the quality of the emulsion can often be penalised by the configuration and/or structural and/or functional characteristics of such conventional apparatuses. For example, the influence that the mixing operation of the milk with the air and the steam addition operation have upon each other, due to the fact that they are carried out in the same area, can have a negative influence upon the quality of the emulsion. A coffee machine with a Venturi element and an external milk container connected thereto are known from EP- A - 0791321 and WO01/26520A.

The technical task proposed of the present invention is, therefore, that of making a coffee machine having a device for producing a milk-based drink that allows the aforementioned technical drawbacks of the prior art to be eliminated.

In this technical task a purpose of the invention is that of making a coffee machine having a device for producing a milk-based drink that is versatile and extremely easy to use.

A further purpose of the present invention is that of providing a coffee machine having a device for producing a milk-based drink that is easy to inspect and accessible in all of its parts.

Another purpose of the invention is that of providing a coffee machine having a device for producing a milk-based drink that has a system for cleaning the inner parts that is extremely effective so as to keep a high standard of performance.

Another purpose of the present invention is that of providing a coffee machine having an effective device for producing a milk-based drink such as to ensure that the drink always has the desired organoleptic characteristics.

The technical task, as well as these and other purposes, according to the present invention, are accomplished by a coffee machine according to claim 1.

Advantageously, therefore, the coffee machine allows an amount of brewed coffee and milk frothed with steam to be produced with a single command. Other characteristics of the present invention are defined, moreover, in the following claims. Further characteristics and advantages of the invention shall become clearer from the description of a preferred but not exclusive embodiment of the device for producing a milk-based drink according to the finding, illustrated for indicating and not limiting purposes in the attached drawings, in which:
- figure 1 shows a perspective view of the device for producing a milk-based drink of the present finding removed from the steam or hot water dispenser of the coffee machine;
- figure 2 shows a perspective view of the device of figure 1 connected to the steam or hot water dispenser of the coffee machine;
- figure 3 shows an axial section of the collector body of the device of figure 1;
- figure 4 shows a top side view of an axial section of the collector body and of the milk container of the device of figure 1;
- figure 5 shows another perspective view of the device of figure 1;
- figure 6 shows the device of figure 1 disassembled into its constituent parts;

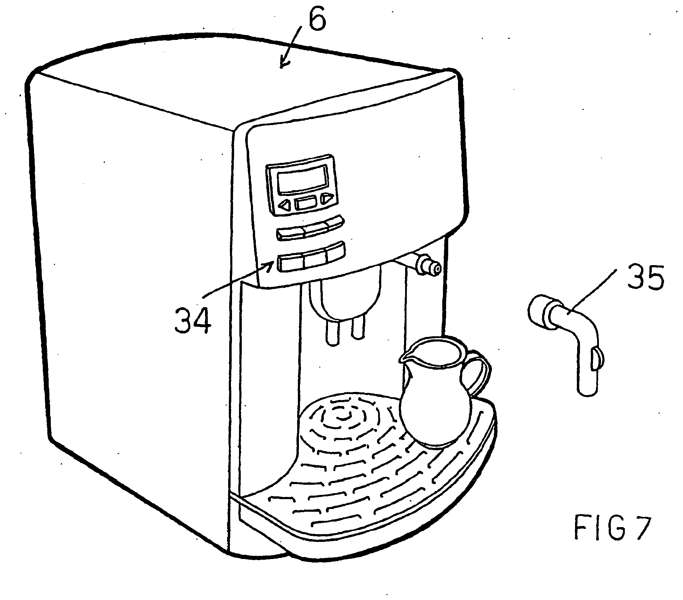

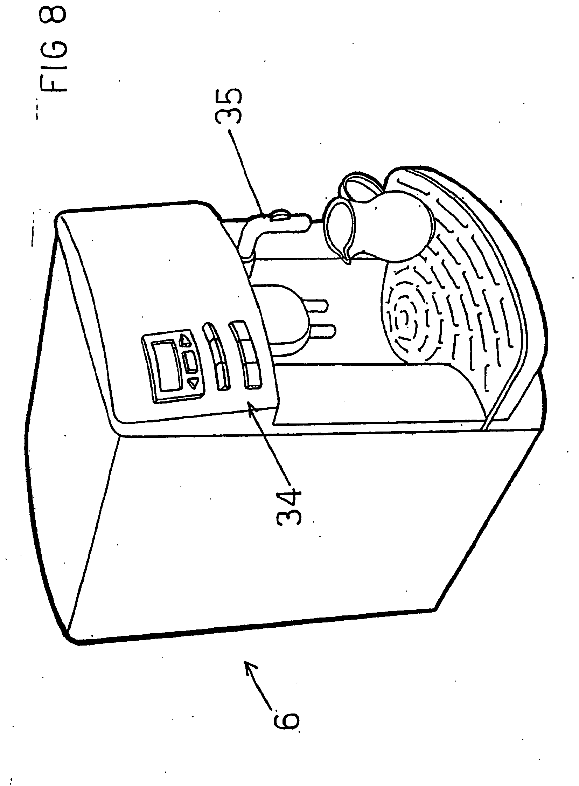

- figures 7 and 8 illustrate a coffee machine equipped with the original steam or hot water dispensing nozzle for the conventional production of a milk-based drink or other drinks;
- figure 9 shows a scheme of the water/steam circuit of a device according to the present invention;

Equivalent parts of the different embodiments of the device in the following description shall be indicated by the same reference numeral.

With reference to the quoted figures, a device for producing a milk-based drink is shown, wholly indicated with reference numeral 1.

The device 1 is comprised in a coffee machine 6 having a dispenser group for dispensing brewed coffee in a cup positionable in a zone below said dispenser group, and a steam or hot water dispenser 5.

The device 1 comprises an inlet pathway 4 into which the dispenser 5 is horizontally introduced, and a container 2 for the milk including a cover 26 that carries a collector body 3.

A discharge nozzle 9 is further connected to a discharge pathway 8 of the collector body 3.

The collector body 3 defines an inner recess 300 into which a connection pathway 401 to the dispenser 5, a suction pathway 7 of the milk present in the container 2 and an air suction pathway 10 open.

Advantageously in a working position the discharge nozzle 9 is directed towards the zone below the dispenser group for conveying the milk into said cup to be mixed with the brewed coffee.

Furthermore the container 2 is removably associated with the dispenser 5 so as to be able to be separated from it for conservation of the milk present in the container 2 together with the cover 26, the collector body 3 and the discharge nozzle 9.

The collector body 3 is carried by the cover 26 of the container 2, and in particular, as illustrated, can be formed integrally with it. Preferably, the collector body 3 extends in a position outside and at the apex of a first side wall 14 of the container 2.

The discharge nozzle 9 can be removably fitted to the discharge pathway 8 from the recess 300.

The discharge nozzle 9 is rotatably connected to the discharge pathway 8 of the collector body 3, between a rest position adjacent to the first side wall 14 of the container 2 and said work position distant from it.

In particular, the discharge nozzle 9 has its rotation axis arranged on the extension of the dispenser 5.

The discharge nozzle 9 also has a manual grip 15 for moving from rest position to work position and vice-versa.

The container 2 has a substantially quadrangular shape in plan, with a grip 18 at a second side wall 19 perpendicular to the axial extension of the steam or hot water dispenser 5, and a lip 20 formed in a third side wall 21 of the container 2 opposite the side wall 19.

The pouring lip 20 is suitable for pouring the milk when the device 1 is not connected to the coffee machine 6.

Advantageously, indeed, the container 2 can also be used independently to conserve milk in the refrigerator so as to make cold milk immediately available to the customer.

The container 2 has a pocket 22 formed outside of the first side wall 14 of the container 2 and below the discharge nozzle 9 to collect possible leakages of drops of liquid when the discharge nozzle 9 is in rest position.

The container 2 also has a substantially vertical supply channel of the milk from the bottom of the container 2 to the suction pathway 7 of the collector body 3, also formed outside the first side wall 14 of the container 2.

The suction pathway 7 has a portion connected with the milk supply channel 23.

The device 1 also has a flexible tube 25 that extends axially inside the milk supply channel 23 and projects at one end towards the bottom of the container 2 and at the other end inside the fitting portion 24 of the suction pathway 7.

The collector body 3, the milk supply channel 23, the discharge nozzle 9 and the collection pocket 22 are arranged in a recess of the first side wall of the container 2 to limit the overall bulk of the device 1.

The device 1 can comprise at least first scraping means 402 suitable for carrying out a cleaning scrape of the inner surface of the air suction pathway 10.

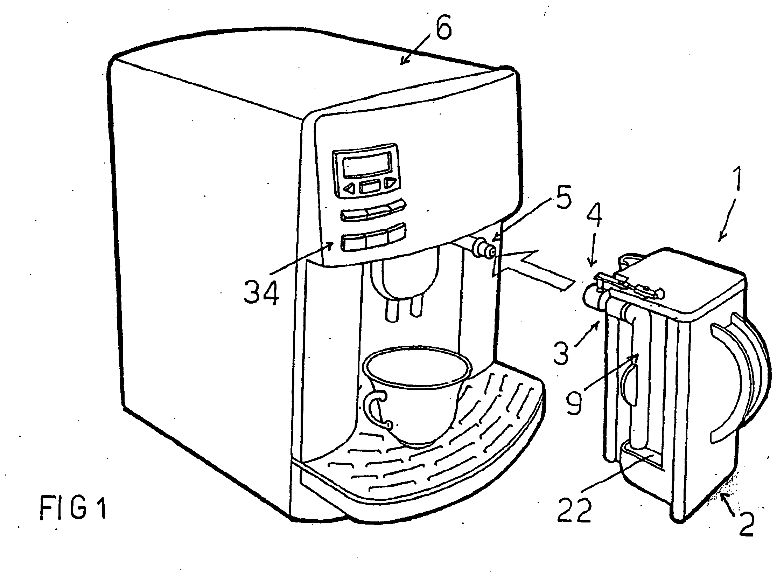

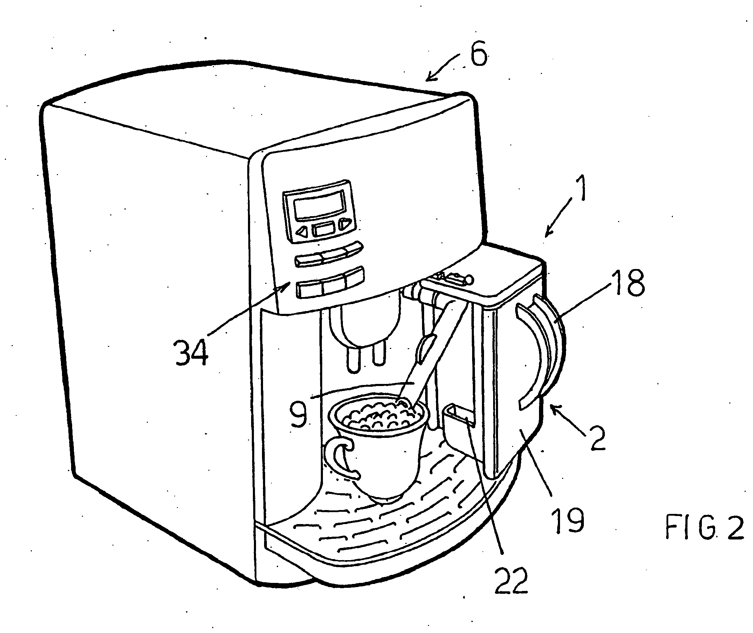

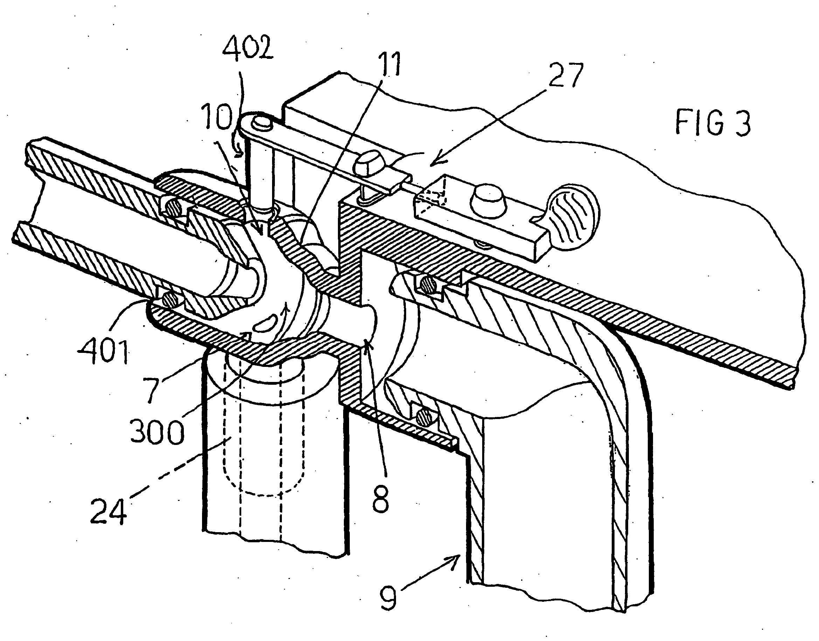

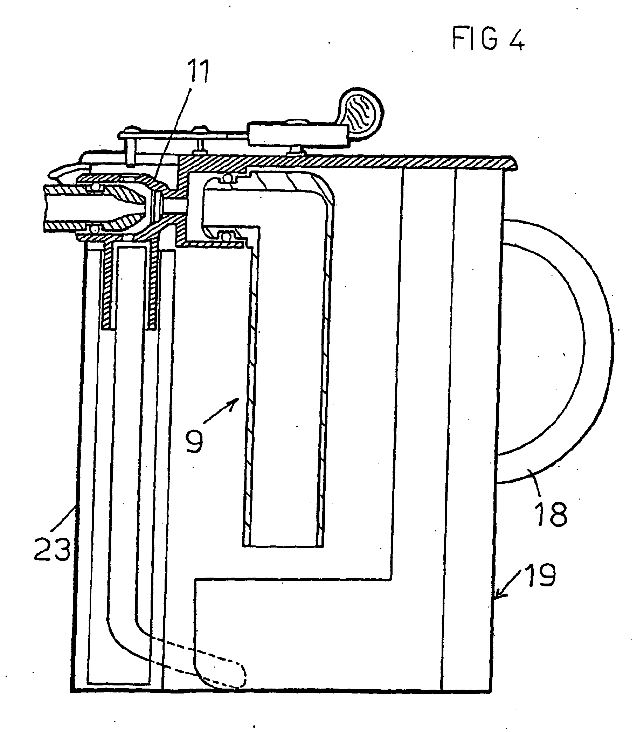

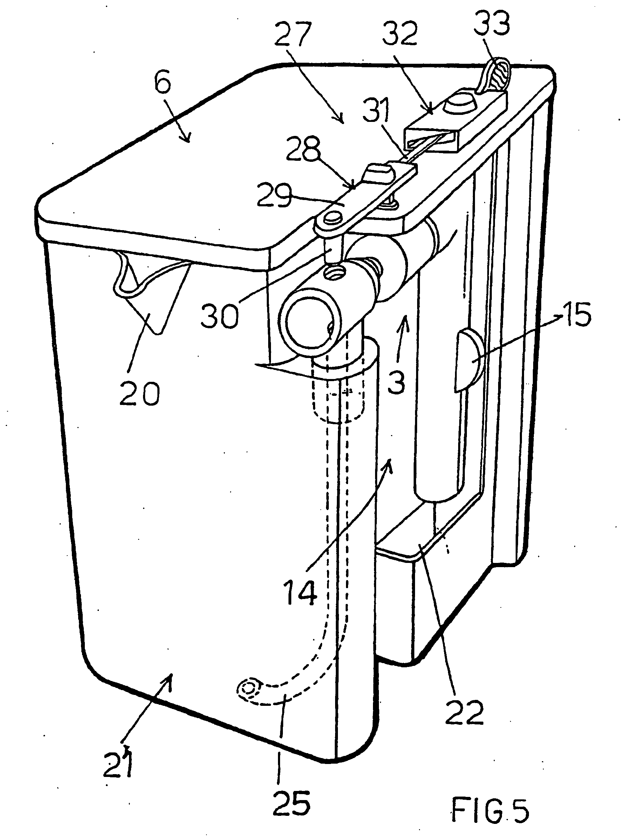

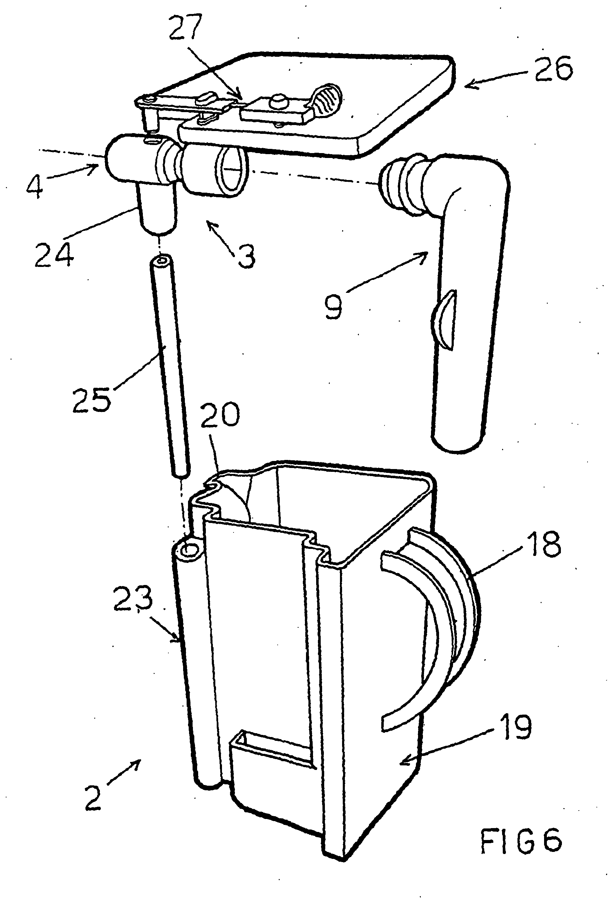

We shall now refer, in particular, to figures 1-6. The pathway 4 and the discharge pathway 8 are arranged in parallel along the main axis of the collector body 3, whereas the milk inlet pathway 7 and the air inlet pathway 10 are arranged transversally to the main axis of the collector body 3 and diametrically opposite.

The flows from the pathways 7 and 10 and from the dispenser 5 mix in a single solution in the mixing chamber defined by the free portion of the recess 300 defined by the dispenser 5.

The recess 300 has a convergent portion 11, suitable for creating a Venturi effect that determines the sucking up of milk from the container 2 when it is crossed by the flow of steam.

The scraping means for cleaning the inner surface of the pathway 10 are actuated by a manually controlled leverism 27 pivoted directly on the cover 26.

The leverism 27 comprises a lever 28 that can be operated perpendicular to the lying plane of the cover 26 and having a first lever arm 29 carrying a scraping finger 30 of the third pathway 10 and a second lever arm 31 arranged in a guide pivoted on the cover 26 and rotatable parallel to the lying plane of the cover 26.

The guide 32 has a guide plane that is inclined with respect to the lying plane of the cover 26 so that a rotation in one direction and, respectively, in the opposite direction commands the lowering and raising, respectively, of the first lever arm 31 and consequently the extraction and introduction, respectively, of the scraping finger 30 into/from the pathway 10.

The control of the leverism 27 is carried out manually through an ear 33 integral with the guide 32.

The process for producing a cappuccino is briefly the following.

The coffee machine 6 has a keypad 34 having at least one button for commanding the production of a cappuccino and buttons for activating the functions of steam and water production to be sent to the dispenser 5.

The device 1 is associated.with the coffee machine by introducing the dispenser 5 into the inlet pathway 4, and then the button for activating the steam function is pressed.

When the button that enables the production of a cappuccino is pressed, the control unit of the coffee machine automatically commands the preparation of a dose of brewed coffee in a cup positioned in a zone below the dispenser group of the coffee machine, the withdrawal of a predetermined amount of milk contained in the container 2 through the action of a steam flow sent by the dispenser 5 and the consequent controlled frothing of the milk through the effect of the air entering through the inlet pathway 10 of the collecting chamber 3, the interruption of the flow of steam when the predetermined amount of milk has been withdrawn, and the final conveying of the milk into the cup thanks to the discharge nozzle directed towards the zone below the dispenser group, for it to be mixed with the brewed coffee.

Clearly, it is possible to prepare the milk first and then the brewed coffee or vice-versa.

In the case in which its is wished to produce a coffee and milk-based drink without froth the same procedure described above is repeated actuating the means for adjusting the air flow so as to zero the air flow.

The coffee machine, through a suitable command, can also command the production of an exclusively frothed milk-based drink. In this case the same procedure described above is repeated eliminating the first step of producing a dose of brewed coffee in the cup.

After having removed the device 1 the dispenser 5 can once again have its nozzle 35 with which it was originally equipped connected. In this way, a cappuccino can be produced with the more conventional method, pressing the buttons for activating the steam production function, or else hot water can be produced for the preparation of a tea-based or other brew, pressing the buttons for activating the hot water production.

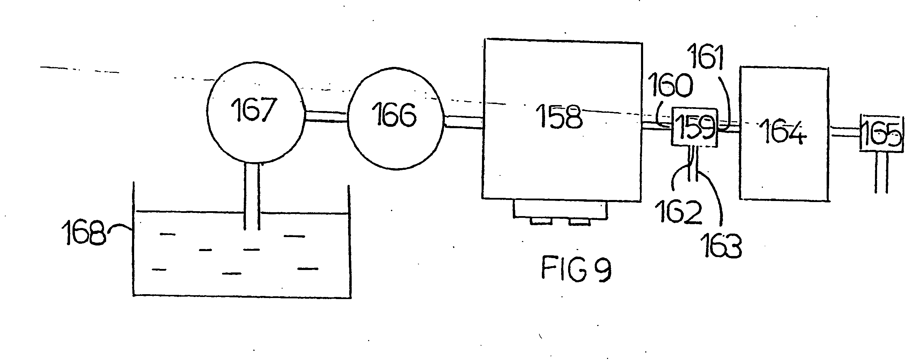

Now with reference to figure 9, a preferred embodiment of the hot water production circuit and of the steam production circuit is illustrated, which are both supplied by an electropump 166 controlled by a flowmeter 167 and suitable for withdrawing water from a reservoir 168.

The hot water circuit comprises a first boiler 158 (suitable for producing hot water) connected through a first valve (not shown) to the brewing chamber of the coffee machine.

The steam circuit extends from the first boiler 158 through a second electrovalve 159 having three pathways 160, 161 and 162 that puts the first boiler 158 in communication with a discharge line 163 and with a second boiler 164 for producing steam in turn connected to the steam dispenser 5 through a third electrovalve 165.

To produce a cappuccino, when the operator gives a single command, first of all the water circuit for the preparation of the brewed coffee is activated. In this step the first valve is open, whereas the second and third electrovalve 159 and 165 remain closed and the electropump 166 is actuated until the flowmeter 167 has measured the passage into the first boiler 158 of a predetermined volume of water to make the brewed coffee.

Then the steam circuit for frothing the milk is activated.

In this step the first valve closes whereas the second electrovalve 159 opens the pathways 160 and 161 and keeps the pathway 162 of the discharge line closed, the third electrovalve 165 opens, and the electropump 166 is actuated until the flowmeter 167 has measured the passage into the second boiler 164 of a predetermined volume of water to make the steam necessary to froth the milk.

Finally, there follows a discharge step of the pressure of the steam, in which the second electrovalve 159 keeps the pathway 161 open, closes the pathway 160 and opens the steam discharge pathway 163.

Preferably, to limit the absorption of electrical energy the first and second boiler are selectively activated, possibly intermittently, and thus the water destined for the second boiler is not necessarily preheated in the first boiler. Moreover, when the second boiler is activated the opening of the electrovalve 165 is delayed with respect to the starting of the electropump 166 so as to generate pressurised steam.

The coffee machine thus conceived can undergo numerous modifications and variants within the scope of the appended claims; moreover, all of the details can be replaced with technically equivalent elements.

In practice, the materials used, as well as the sizes, can be whatever according to the requirements and the state of the art.

## Claims

1. Coffee machine having a steam or hot water dispenser (5) and a dispenser group for dispensing brewed coffee in a cup positionable in a zone below said dispenser group, and a device for producing a milk-based drink, wherein said device comprises an inlet pathway (4) into which said steam or water dispenser (5) is horizontally introduced and a container (2) for the milk including a cover (26) that carries a collector body (3) that defines an inner recess (300) into which a connection pathway (401) to said dispenser (5), a milk suction pathway (7) in said container (2) and an air suction pathway (10) open, a discharge nozzle (9) being connected to a discharge pathway (8) of said collector body (3), in a working position said discharge nozzle (9) being directed towards said zone below said dispenser group for conveying the milk into said cup to be mixed with said brewed coffee, said container (2) being removably associated with said dispenser (5) so as to be able to be separated from it for conservation of the milk present in said container (2) together with said cover (26), said collector body (3) and said discharge nozzle (9), wherein said discharge nozzle (9) is rotatably supported between a rest position adjacent to a side wall (14) of said container (2) and said work position distant from said side wall (14) of said container (2).

2. Coffee machine according to claim 1, wherein said discharge nozzle (9) is removably connected to said discharge pathway (8) of said collector body (3).

3. Coffee machine for producing a milk-based drink according to one or more of the previous claims, wherein said discharge nozzle (9) has its rotation axis arranged on the extension of the main axis of said collector body (3).

4. Coffee machine for producing a milk-based drink according to one or more of the previous claims, wherein said container (2) has a pocket (22) formed outside of said side wall (14) of said container (2) and below said discharge nozzle (9) to collect possible leakages of drops of liquid when said discharge nozzle (9) is in rest position.

5. Coffee machine for producing a milk-based drink according to one or more of the previous claims, wherein said container (2) has a pouring lip (20).

6. Coffee machine according to the claim 5, further comprising a hot water production circuit and a steam production circuit supplied by an electropump (166) controlled by a flowmeter (167).

7. Coffee machine according to claim 6, wherein said hot water circuit comprises a first boiler (158) and said steam circuit extends from said first boiler (158) : through an electrovalve (159) with three pathways (160, 161, 162) that puts said first boiler (158) in communication with a steam discharge line (163) and with a second boiler (164) for producing steam in turn connected to said dispenser (5) through a further electrovalve (165).

8. Machine according to the claim 7, wherein said first and second boiler (158, 164) are selectively activated.

9. Machine according to any claims 7 or 8, wherein when said second boiler (164) is activated the opening of said further electrovalve (165) is delayed with respect to the actuation of said electropump (166) to pressurise the steam produced.

## Patentansprüche

1. Kaffeemaschine mit einem Dampf- oder Heißwasserdispenser (5) und einer Ausgabegruppe, um gebrauten Kaffee in eine in eine Zone unterhalb besagter Ausgabegruppe stellbare Tasse auszugeben, und mit einer Vorrichtung zur Produktion eines Getränks auf Milchbasis, wobei besagte Vorrichtung eine Eingangsleitung (4), in die besagter Dampf- oder Heißwasserdispenser (5) horizontal eingeführt wird, und einen Behälter (2) für die Milch mit einem Deckel (26) umfasst, der einen Sammelkörper (3) aufnimmt, der eine innere Einbuchtung (300) definiert, in der sich eine Verbindungsleitung (401) zu besagtem Dispenser (5), eine Milchansaugleitung (7) in den besagten Behälter (2) und eine Luftansaugleitung (10) öffnen; besagter Ausflussstutzen (9) ist mit einer Ausflussleitung (8) des besagten Sammelkörpers (3) verbunden, wobei besagter Ausflussstutzen (9) in Arbeitslage in Richtung der besagten Zone unterhalb besagter Ausgabegruppe zur Beförderung der Milch in die besagte Tasse gerichtet ist, damit sie mit besagtem gebrautem Kaffee vermischt wird, wobei besagter Behälter (2) mit besagtem Dispenser (5) entfernbar verbunden ist, so dass man ihn von diesem abnehmen kann, um die in besagtem Behälter (2) vorhandene Milch zusammen mit besagtem Deckel (26), besagtem Sammelkörper (3) und besagtem Ausflussstutzen (9) aufbewahren zu können, wobei besagter Ausflussstutzen (9) drehbar gelagert ist zwischen einer Ruhelage an einer Seitenwand (14) des besagten Behälters (2) und besagter Arbeitslage, die fern von besagter Seitenwand (14) des besagten Behälters (2) ist.

2. Kaffeemaschine nach Anspruch 1, bei der besagter Ausflussstutzen (9) mit besagter Ausflussleitung (8) des besagten Sammelkörpers (3) entfernbar verbunden ist.

3. Kaffeemaschine zur Herstellung eines Getränkes auf Milchbasis nach einem oder mehreren der vorhergehenden Ansprüche, bei der sich die Rotationsachse des besagten Ausflussstutzens (9) auf der Verlängerung der Hauptachse des besagten Sammelkörpers (3) befindet.

4. Kaffeemaschine zur Herstellung eines Getränkes auf Milchbasis nach einem oder mehreren der vorhergehenden Ansprüche, bei der besagter Behälter (2) eine Tasche (22) besitzt, die an der Außenseite von besagter Seitenwand (14) des besagten Behälters (2) und unter besagtem Ausflussstutzen (9) gebildet wird, um eventuelle heruntertropfende Flüssigkeit aufzufangen, wenn sich besagter Ausflussstutzen (9) in Ruhelage befindet.

5. Kaffeemaschine zur Herstellung eines Getränkes auf Milchbasis nach einem oder mehreren der vorhergehenden Ansprüche, bei der besagter Behälter (2) mit einer Ausgusslippe (20) versehen ist.

6. Kaffeemaschine nach Anspruch 5, die ferner einen Kreislauf zur Heißwasserproduktion und einen Kreislauf zur Dampfproduktion umfasst, versehen mit einer Elektropumpe (166), die von einem Durchflussmesser (167) gesteuert wird.

7. Kaffeemaschine nach Anspruch 6, bei der besagter Heißwasserkreislauf einen ersten Boiler (158) umfasst, und besagter Dampfkreislauf sich vom besagten ersten Boiler (158) über ein Elektroventil (159) mit drei Leitungen (160, 161, 162) erstreckt, das besagten ersten Boiler (158) in Verbindung setzt mit einer Dampfabgabeleitung (163) und mit einem zweiten Boiler (164) zur Produktion von Dampf, der wiederum durch ein weiteres Elektroventil (165) mit besagtem Dispenser (5) verbunden ist.

8. Kaffeemaschine nach Anspruch 7, bei der besagter erster und zweiter Boiler (158, 164) selektiv aktiviert werden.

9. Kaffeemaschine nach Anspruch 7 oder 8, bei der, wenn besagter zweiter Boiler (164) aktiviert wird, das Öffnen des besagten weiteren Elektroventils (165) verzögert ist bezüglich des Antriebs der besagten Elektropumpe (166), um den produzierten Dampf unter Druck zu setzen.

## Revendications

1. Machine à café possédant un distributeur de vapeur ou d'eau chaude (5) et un groupe distributeur pour distribuer du café infusé dans une tasse pouvant être positionnée dans une zone au-dessous dudit groupe distributeur, et un dispositif pour la production d'une boisson à base de lait, où ledit dispositif comprend une voie d'entrée (4) dans laquelle ledit distributeur de vapeur ou d'eau (5) est introduit horizontalement et un récipient (2) pour le lait comprenant un couvercle (26) qui porte un corps collecteur (3) qui définit un renfoncement intérieur (300) dans lequel s'ouvrent une voie de connexion (401) vers ledit distributeur (5), une voie d'aspiration du lait (7) dans ledit récipient (2) et une voie d'aspiration de l'air (10), une buse d'évacuation (9) étant reliée à une voie d'évacuation (8) dudit corps collecteur (3), dans une position de travail ladite buse d'évacuation (9) étant dirigée vers ladite zone au-dessous dudit groupe distributeur pour convoyer le lait dans ladite tasse pour le mélanger avec ledit café infusé, ledit récipient (2) étant associé de manière amovible audit distributeur (5) afin de pouvoir être séparé de ce dernier pour la conservation du lait présent dans ledit récipient (2) avec ledit couvercle (26), ledit corps collecteur (3) et ladite buse d'évacuation (9), dans laquelle ladite buse d'évacuation (9) est supportée de manière rotative entre une position de repos adjacente à une paroi latérale (14) dudit récipient (2) et ladite position de travail distante de ladite paroi latérale (14) dudit récipient (2).

2. Machine à café selon la revendication 1, où ladite buse d'évacuation (9) est reliée de manière amovible à ladite voie d'évacuation (8) dudit corps collecteur (3).

3. Machine à café pour la production d'une boisson à base de lait selon une ou plusieurs des revendications précédentes, où ladite buse d'évacuation (9) possède son axe de rotation disposé sur l'extension de l'axe principal dudit corps collecteur (3).

4. Machine à café pour la production d'une boisson à base de lait selon une ou plusieurs des revendications précédentes, où ledit récipient (2) possède une poche (22) formée hors de ladite paroi latérale (14) dudit récipient (2) et au-dessous de ladite buse d'évacuation (9) pour récolter les fuites possibles de gouttes de liquide lorsque ladite buse d'évacuation (9) est en position de repos.

5. Machine à café pour la production d'une boisson à base de lait selon une ou plusieurs des revendications précédentes, où ledit récipient (2) possède un bec verseur (20).

6. Machine à café selon la revendication 5, comprenant également un circuit de production d'eau chaude et un circuit de production de vapeur alimenté par une électropompe (166) contrôlée par un débitmètre (167).

7. Machine à café selon la revendication 6, où ledit circuit d'eau chaude comprend une première chaudière (158) et ledit circuit de vapeur s'étend depuis ladite première chaudière (158) à travers une électrovanne (159) avec trois voies (160, 161, 162) qui mettent ladite première chaudière (158) en communication avec une ligne d'évacuation de vapeur (163) et avec une deuxième chaudière (164) pour la production de vapeur à son tour reliée audit distributeur (5) à travers une électrovanne supplémentaire (165).

8. Machine selon la revendication 7, où lesdites première et deuxième chaudières (158, 164) sont activées de manière sélective.

9. Machine selon l'une des revendications 7 ou 8, où lorsque ladite deuxième chaudière (164) est activée, l'ouverture de ladite électrovanne supplémentaire (165) est retardée par rapport à l'activation de ladite électrovanne (166) pour pressuriser la vapeur produite.
